# EUROPÄISCHE PATENTANMELDUNG

(11) **EP 4 623 679 A1**
(43) Veröffentlichungstag der Anmeldung: **01.10.2025**
(21) Anmeldenummer: 25166129.4
(22) Anmeldetag: 25.03.2025
(51) Int. Cl.: A01K 1/02

(54) **SCHWEINESTALL**

(30) Priorität: 25.03.2024 DE 202024101489 U
(71) Anmelder: A. G. Stalltechnik & Genetik GmbH, 26892 Heede / Ems (DE)
(72) Erfinder: Ganseforth, Heinrich, 26892 Heede (DE)
(74) Vertreter: Jabbusch, Matthias

(57) **Zusammenfassung**

Beschrieben ist ein Schweinestall mit wenigstens einer Buchteneinheit (32, 33, 34, 35), deren Buchten (1, 2, 3, 4) jeweils wenigstens einen Aufenthaltsbereich (5, 6, 7, 8) für Muttersauen und Ferkel, wenigstens ein Ferkelnest (9, 10, 11, 12) sowie wenigstens einen auf Spaltenboden eingerichteten Futter- und Toilettenbereich (13, 14, 15, 16) aufweisen. Jede Buchteneinheit (32, 33, 34, 35) weist vier Buchten (1, 2, 3, 4) in einer funktionell doppelsymmetrischen Anordnung zueinander auf, wobei eine der Symmetrieachsen auf der Mittellinie eines Verbindungsganges (17) liegt, über den die Zugänge (18, 19, 20, 21) zu den Buchten (1, 2, 3, 4) miteinander verbunden sind. Die jeweils andere Symmetrieachse verläuft in einer Zwischenwandung (22), welche beidseitig des Verbindungsganges (17) zwischen den Futter- und Toilettenbereichen (13, 14, 15, 16) jeweils zweier Buchten (1, 3) und (2, 4) ausgebildet ist.

## Beschreibung

Die Erfindung betrifft einen Schweinestall mit wenigstens einer Buchteneinheit, deren Buchten jeweils wenigstens einen Aufenthaltsbereich für Muttersauen und Ferkel, wenigstens ein Ferkelnest sowie wenigstens einen auf Spaltenboden eingerichteten Futter- und Toilettenbereich aufweisen.

Es ist bekannt, dass das Domestizieren des Wildschweins zum Hausschwein zu Lasten seiner Widerstandsfähigkeit gegen diverse Witterungseinflüsse gegangen ist. In der Folge benötigte man für Hausschweine Stallungen, welche die Tiere vor Witterungseinflüssen schützten. Im Zuge der Intensivierung der Nutztierhaltung wurden derartige Stallungen zu speziellen Schweineställen weiterentwickelt, mit denen sich die Effizienz bei der Fleischproduktion nochmals erheblich steigern ließ. Dabei wurde aus Effizienzgründen insbesondere auch auf den Einsatz großer Stalleinheiten mit hohen Besatzdichten gesetzt, wobei die erhöhte Ammoniakbildung und räumliche Beengtheit zu einer großen Stressbelastung und schließlich zu einem erhöhten Infektionsrisiko führen. Das hat schließlich dazu geführt, dass die Tiere in der intensiven Nutztierhaltung einem Leid ausgesetzt waren, was sich auch in der Qualität des Fleisches bemerkbar gemacht hat. Aufklärungsarbeit von Tier- und Umweltschützern, Gesundheitsexperten und Ernährungswissenschaftlern hat schließlich zu einem Umdenken in der Bevölkerung geführt, so dass immer größer werdende Bevölkerungsteile darauf achten, wie es den Tieren, dessen Fleisch sie essen, bis zu ihrer Schlachtung ergangen ist. Besonders hervorzuheben ist die "Initiative Tierwohl", die mit der Vergabe eines Gütesiegels an landwirtschaftliche Betriebe wirbt, welche sich der Einhaltung definierter Standards verpflichtet haben. Leider gehen sämtliche Bestrebungen zur Verbesserung der Haltebedingungen von Tieren mit steigenden Fleischkosten einher. Die Akzeptanzbereitschaft für solche Preissteigerungen ist jedoch oftmals auch kleiner als der Wunsch nach mehr Tierwohl.

Der Erfindung liegt deshalb die Aufgabe zugrunde, einen Schweinestall der eingangs genannten Gattung aufzuzeigen, mit dem die Mehrkosten für Schweinefleisch bei maßgeblich verbessertem Tierwohl in akzeptablen Grenzen gehalten werden können.

Diese Aufgabe ist erfindungsgemäß durch einen Schweinestall mit den Merkmalen des Schutzanspruches 1 gelöst. Vorteilhafte Weiterbildungen der Erfindung sind in den Unteransprüchen angegeben.

Der erfindungsgemäße Schweinestall zeichnet sich dadurch aus, dass jede Buchteneinheit vier Buchten in einer funktionell doppelsymmetrischen Anordnung zueinander aufweist. Eine ihrer Funktion nach doppelsymmetrische Anordnung der Buchten zueinander erfordert im Rahmen dieser Erfindung nicht zwangsläufig auch eine ihrer Konstruktion nach doppelsymmetrische Anordnung. Schutz wird für jeden Schweinestall beansprucht, dessen der Buchtenausrichtung zukommende Funktionen eine Doppelsymmetrie zugeschrieben werden kann. Diese ermöglicht eine vorteilhaft kompaktbauende Buchteneinheit, mit der Baukosten und Betriebskosten reduziert werden können. Gleichzeitig ermöglicht die doppelsymmetrische Anordnung den Schweinen die für sie artspezifische Rottenbildung. Das Ausleben von artspezifischen Verhaltensweisen senkt den Stresspegel und stärkt das Immunsystem, so dass krankheitsbedingte Ausfälle auch ohne den Einsatz von Antibiotika nahezu vollständig vermieden sind.

Nach einer ersten Weiterbildung des erfindungsgemäßen Schweinestalls liegt wenigstens eine der Symmetrieachsen auf der Mittellinie eines Verbindungsganges, über den die Zugänge zu den Buchten miteinander verbunden sind. Die Symmetrieachse ermöglicht eine gemeinsame Nutzung des Verbindungsganges von vier Muttersauen und deren Ferkeln und fördert genau damit die Rottenbildung und schließlich das natürliche Sozialverhalten der Schweine insgesamt.

Nach einer nächsten Weiterbildung der Erfindung verläuft die jeweils andere Symmetrieachse in einer Zwischenwandung, welche beidseitig des Verbindungsganges zwischen den Futter- und Toilettenbereichen, jeweils zweier Buchten ausgebildet ist. Eine derart ausgebildete Symmetrieachse ermöglicht vorteilhaft die gemeinsame Nutzung der Zwischenwandung als Sichtschutz und Trägerstruktur für vier in jeweils einer der Buchten angeordnete Futtertröge.

Um zu verhindern, dass noch besonders kleine Ferkel den Anschluss an ihre Muttersau verpassen und dann der Gefahr einer Unterkühlung ausgesetzt sind, wird vorgeschlagen, dass an den Zugängen zu den Buchten im Spaltenboden höhenverstellbar gehaltene Ferkelsperren angeordnet sind. Mit solchen Ferkelsperren ist die Überlebenssicherheit für die Ferkel auf besonders effiziente Weise nachhaltig verbessert, ohne damit die Bewegungsfreiheit der Muttersauen einzuschränken. Für eine möglichst gute Sperrwirkung ist die Ferkelsperre nach Art einer Türschwelle mit einem wenigstens einseitig abgerundeten Schwellenkopf auf, an welchem die Ferkel mit ihren Klauen abrutschen, sollten sie versuchen die Ferkelsperre von Seiten ihrer Bucht zu überwinden. Die Höhenverstellung ermöglicht vorteilhaft eine Anpassung der Sperrwirkung, beispielsweise an aktuell vorherrschende Witterungsbedingungen, Tageszeiten oder tierspezifische Merkmale, wie die Empfindlichkeit oder Größe einer bestimmten Schweinerasse.

Nach einer besonders vorteilhaften Weiterbildung der Erfindung sind der Buchteneinheit ein Zentralgang sowie ein Außenauslauf zugeordnet, wobei der Zentralgang und der Außenauslauf über den Verbindungsgang miteinander verbunden sind. Der Zentralgang sowie der Außenauslauf sind nicht Bestandteile der Buchteneinheit mit ihren vier Buchten in doppelsymmetrischer Anordnung. Vorzugsweise durchläuft der Zentralgang den erfindungsgemäßen Schweinestall auf einer Längsachse und dient somit der Verbindung beidseitig des Zentralgangs angeordneter Buchteneinheiten untereinander. Der Außenauslauf ist der jeweiligen Buchteneinheit an der Längsseite des Schweinestalls vorgelagert und ist wenigstens teilweise überdacht, um den Schweinen auch an frischer Außenluft einen partiellen Schutz vor Sonnenlicht oder Niederschlag anzubieten.

Um den Schweinen einen eigenmächtigen Zugang in den Zentralgang hinein zu verwehren, ist nach einer nächsten Weiterbildung der Erfindung vorgesehen, dass der Verbindungsgang wenigstens eine Innentür aufweist, die zwischen den Zugängen zu den Buchten einerseits und dem Zentralgang andererseits angeordnet ist. Die Innentür dient dem Personal des Schweinestallbetreibers maßgeblich als Zugang zu der Buchteneinheit sowie als Schleusentor zum Aus- und Einschleusen von Schweinen in die Buchteneinheit hinein beziehungsweise aus dieser heraus.

Um das Tierwohl weiter zu verbessern, weist der Verbindungsgang nach einer anderen Ausgestaltung der Erfindung wenigstens eine Außentür auf, die zwischen den Zugängen zu den Buchten einerseits und dem Außenauslauf andererseits ausgebildet ist. In ihrer Grundstellung wird die Außentür geschlossen gehalten, so dass sie die Buchteneinheit und deren Buchten vor Auskühlung, Überhitzung und Zugluft schützt. Zum Öffnen der Außentür weist diese einen Türöffner auf, dessen Betätigung besonders einfach von den Schweinen erlernt werden kann. Ein nachfolgendes Verschließen der Tür erfolgt beispielsweise automatisch über ein sogenanntes Zeitverzögerungsrelais.

Der mit dem erfindungsgemäßen Schweinestall erreichbare wirtschaftliche Vorteil steigt mit der Anzahl der in einem Stallgebäude zusammengefassten Buchteneinheiten. Deshalb ist vorgesehen, dass die Buchteneinheit zusammen mit gleichen Buchteneinheiten in jeweils einfachsymmetrischer Anordnung beidseitig des die Symmetrieachse ausbildenden Zentralganges angeordnet sind. In Abhängigkeit von der Ausrichtung des Zentralganges zu den Himmelsrichtungen kann darüber nachgedacht werden, die Außenausläufe der auf einer Seite des Zentralganges gelegenen Buchteneinheiten unterschiedlich zu den Außenausläufen der auf der anderen Seite des Zentralganges gelegenen Buchteneinheiten auszubilden, beispielsweise um unterschiedliche Witterungseinflüsse oder Sonnenscheinstunden auszugleichen.

Nach einer besonders zweckmäßigen Weiterbildung der Erfindung ist unterhalb der Futter- und Toilettenbereiche ein Güllekeller mit einer Wärmerückgewinnung ausgebildet. Mit der Wärmerückgewinnung kann in den Exkrementen der Tiere enthaltene Wärme über eine Wärmetauscherfläche an eine Frischluft abgegeben werden, die zur fortwährenden Belüftung des Schweinestalls benötigt wird. Eine andere Möglichkeit besteht darin, die in den Exkrementen der Tiere enthaltende Wärme für eine Fußbodenerwärmung zu nutzen. Mit der Wärmerückgewinnung sind insbesondere die Betriebskosten des erfindungsgemäßen Schweinestalls vorteilhaft reduziert.

Eine besonders bedeutsame Verbesserung des Tierwohls ergibt sich daraus, dass jede Bucht eine Fußbodenerwärmung mit wenigstens drei unabhängig voneinander ansteuerbaren Heizkreisen aufweist, wobei wenigstens einer der Heizkreise im Aufenthaltsbereich für Muttersauen und Ferkel angeordnet ist und wenigstens zwei der Heizkreise im Ferkelnest angeordnet sind. Die verschiedenen Heizkreise ermöglichen dabei eine bedarfsorientierte Wärmezufuhr, welche die unterschiedlichen Bedürfnisse von Muttersau und Ferkeln und auch die bei den Ferkeln über ihre Entwicklung hinweg stattfindenden Bedürfnisveränderungen berücksichtigt. Eine bedarfsweise Wärmezufuhr ist beispielsweise eine temporäre Erwärmung des Aufenthaltsbereiches für Muttersauen um den Geburtszeitraum herum. Durch Zuschaltung des zweiten im Ferkelnest angeordneten Heizkreises kann die erwärmte Fläche des Ferkelnestes in ihrer Größe an das Alter der Ferkel angepasst werden. Die Heizkreise des Ferkelnestes bieten jedoch auch die Möglichkeit der Ausbildung unterschiedlicher Temperaturbereiche. Um die Wärmeverluste aus dem Ferkelnest in die umliegenden Bereiche der das Ferkelnest aufweisenden Bucht zu minimieren, weist das Ferkelnest beispielsweise eine reduzierte Deckenhöhe und einen Lamellenvorhang auf. Die reduzierte Deckenhöhe ist beispielsweise mit einem Klappdeckel realisierbar, der dem Personal des Schweinstallbetreibers Kontroll- und Zugriffsmöglichkeiten auf das Ferkelnest einräumt. Selbstverständlich sorgt wenigstens eine auf das Ferkelnest ausgerichtete Infrarotlampe zusätzlich für eine abwärts gerichtete Wärmestrahlung.

Um das natürliche Verhalten bei der gemeinsamen Futteraufnahme von Muttersau und Ferkeln nicht zu behindern, ist nach einer anderen Weiterbildung der Erfindung vorgesehen, dass in jeder Bucht wenigstens ein Gemeinschaftsfuttertrog angeordnet ist, der einen im Futter- und Toilettenbereich angeordneten Trogabschnitt und einen im Ferkelnest angeordneten Trogabschnitt aufweist. Der Gemeinschaftsfuttertrog ist somit ein Bindeglied zwischen dem Ferkelnest und dem Futter- und Toilettenbereich, so dass eine Entwöhnung von der Futteraufnahme aus dem Ferkelnest heraus allmählich, natürlich und somit für die Tiere nahezu stressfrei erfolgen kann.

Um dem stetig größer werdenden Platzbedarf der am Gemeinschaftsfuttertrog miteinander konkurrierenden Ferkel gerecht zu werden, ist nach einer besonders zweckmäßigen Weiterbildung der Erfindung vorgesehen, dass in jedem Futter- und Toilettenbereich wenigstens ein klappbeweglich gehaltenes Funktionsgestänge angeordnet ist, mit welchem in heruntergeklappter Stellung eine Ablegehilfe für Muttersauen und in hochgeklappter Stellung ein Futtertrog für Ferkel ausgebildet ist. Als Ablegehilfe verhindert das Funktionsgestänge vorteilhaft das Verunglücken noch sehr junger Ferkel unter der Muttersau, wenn diese sich an der Stallwandung ablegt. Als Futtertrog ermöglicht das Funktionsgestänge eine Vergrößerung des größeren Ferkeln, insbesondere Absetzferkeln, für die Nahrungsaufnahme zur Verfügung stehenden Raumes.

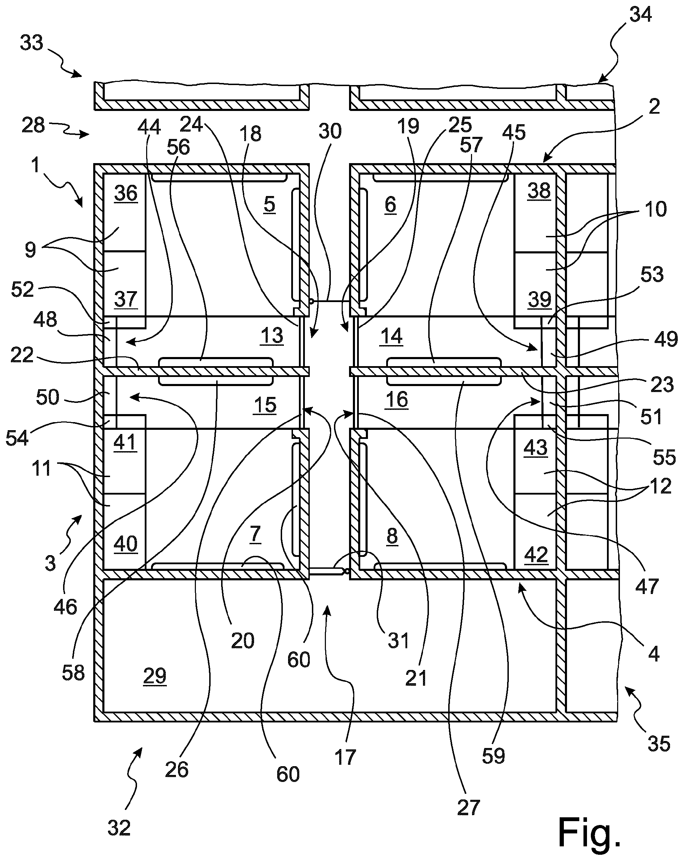

Ein Ausführungsbeispiel der Erfindung, aus dem sich weitere erfinderische Merkmale ergeben, ist in der Zeichnung dargestellt.

Die einzige Figur zeigt eine Raumaufteilung eines erfindungsgemäßen Schweinestalls in einer teilgeschnittenen Draufsicht. Der Teilabschnitt lässt erkennen, dass der Schweinestall mehrere Buchteneinheiten aufweist, deren jeweils vier Buchten 1, 2, 3, 4 jeweils einen Aufenthaltsbereich 5, 6, 7, 8 für Muttersauen und Ferkel, jeweils ein Ferkelnest 9, 10, 11, 12 sowie jeweils einen auf Spaltenboden eingerichteten Futter- und Toilettenbereich 13, 14, 15, 16 aufweisen. Die Buchten 1, 2, 3, 4 weisen eine doppelsymmetrische Anordnung zueinander auf, wobei eine der Symmetrieachsen auf der Mittellinie eines Verbindungsganges 17 liegt, über den die Zugänge 18, 19, 20, 21 zu den Buchten 1, 2, 3, 4 miteinander verbunden sind. Die jeweils andere Symmetrieachse verläuft in einer Zwischenwandung 22, 23, welche beidseitig des Verbindungsganges 17 zwischen den Futter- und Toilettenbereichen 13 und 15 der Buchten 1 und 3 sowie den Futter- und Toilettenbereichen 14 und 16 der Buchten 2 und 4 ausgebildet ist. An den Zugängen 18, 19, 20, 21 zu den Buchten 1, 2, 3, 4 sind im Spaltenboden höhenverstellbar gehaltene Ferkelsperren 24, 25, 26, 27 angeordnet. Den Buchteneinheiten ist ein gemeinsamer Zentralgang 28 sowie jeweils ein Außenauslauf 29 zugeordnet, wobei der Zentralgang 28 und der Außenauslauf 29 über den Verbindungsgang 17 miteinander verbunden sind. Der Verbindungsgang 17 weist eine Innentür 30 auf, die zwischen den Zugängen 18, 19, 20, 21 zu den Buchten 1, 2, 3, 4 einerseits und dem Zentralgang 28 andererseits angeordnet ist. Außerdem weist der Verbindungsgang 17 eine Außentür 31 auf, die zwischen den Zugängen 18, 19, 20, 21 zu den Buchten 1, 2, 3, 4 einerseits und dem Außenauslauf 29 andererseits ausgebildet ist. Die vollständig dargestellte Buchteneinheit 32 ist zusammen mit gleichen Buchteneinheiten 33, 34, 35, von den in der Figur aufgrund des Teilschnittes nur noch kleine Bereich erkennbar sind, in einfach symmetrischer Anordnung beidseitig des die Symmetrieachse ausbildenden Zentralganges 28 angeordnet. Unterhalb der Futter- und Toilettenbereiche 13, 14, 15, 16 ist ein in der Figur nicht dargestellter Güllekeller mit einer Wärmerückgewinnung ausgebildet. Jede Bucht 1, 2, 3, 4 weist eine Fußbodenerwärmung mit drei unabhängig voneinander ansteuerbaren Wärmekreisen auf, wobei einer der Wärmekreise im Aufenthaltsbereich 5, 6, 7, 8 für Muttersauen und Ferkel angeordnet ist und zwei der Wärmekreise jeweils in einem anderen von zwei Teilbereichen 36, 37; 38, 39; 40, 41; 42, 43 des Ferkelnestes 9, 10, 11, 12 angeordnet sind. **In** jeder Bucht 1, 2, 3, 4 ist ein Gemeinschaftsfuttertrog 44, 45, 46, 47 angeordnet, der einen im Futter- und Toilettenbereich 13, 14, 15, 16 angeordneten größeren Trogabschnitt 48, 49, 50, 51 und einen im Ferkelnest 9, 10, 11, 12 angeordneten kleineren Trogabschnitt 52, 53, 54, 55 aufweist. Weiterhin ist in jedem Futter- und Toilettenbereich 13, 14, 15, 16 ein an der Zwischenwandung 22 klappbeweglich gehaltenes Funktionsgestänge 56, 57, 58, 59 angeordnet, mit welchem in der dargestellten heruntergeklappten Stellung eine Ablegehilfe für Muttersauen und in hochgeklappter Stellung ein Futtertrog für Ferkel ausgebildet ist. An weiteren Stallwandungen weisen die Buchten 1., 2, 3, 4 starre Gestängekonstruktionen 60 auf, mit denen zusätzliche Ablegehilfen für Muttersauen ausgebildet sind.

## Patentansprüche

1. Schweinestall mit wenigstens einer Buchteneinheit, deren Buchten jeweils wenigstens einen Aufenthaltsbereich für Muttersauen und Ferkel, wenigstens ein Ferkelnest sowie wenigstens einen auf Spaltenboden eingerichteten Futter- und Toilettenbereich aufweisen,
**dadurch gekennzeichnet,**
**dass** jede Buchteneinheit (32, 33, 34, 35) vier Buchten (1, 2, 3, 4) in einer funktionell doppelsymmetrischen Anordnung zueinander aufweist.

2. Schweinestall nach Anspruch 1, **dadurch gekennzeichnet, dass** wenigstens eine der Symmetrieachsen auf der Mittellinie eines Verbindungsganges liegt, über den die Zugänge (18, 19, 20, 21) zu den Buchten (1, 2, 3, 4) miteinander verbunden sind.

3. Schweinestall nach Anspruch 2, **dadurch gekennzeichnet, dass** die jeweils andere Symmetrieachse in einer Zwischenwandung (22) verläuft, welche beidseitig des Verbindungsganges (17) zwischen den Futter- und Toilettenbereichen (13, 14, 15, 16) jeweils zweier Buchten (1, 3 und 2, 4) ausgebildet ist.

4. Schweinestall nach Anspruch 2 oder 3, **dadurch gekennzeichnet, dass** an den Zugängen (18, 19, 20, 21) zu den Buchten (1, 2, 3, 4) im Spaltenboden höhenverstellbar gehaltene Ferkelsperren (24, 25, 26, 27) angeordnet sind.

5. Schweinestall nach einem der Ansprüche 2 bis 4, **dadurch gekennzeichnet, dass** der Buchteneinheit (32, 33, 34, 35) ein Zentralgang (28) sowie ein Außenauslauf (29) zugeordnet sind, und dass der Zentralgang (28) und der Außenauslauf (29) über den Verbindungsgang (17) miteinander verbunden sind.

6. Schweinestall nach Anspruch 5, **dadurch gekennzeichnet, dass** der Verbindungsgang (17) wenigstens eine Innentür (30) aufweist, die zwischen den Zugängen (18, 19, 20, 21) zu den Buchten (1, 2, 3, 4) einerseits und dem Zentralgang (28) andererseits angeordnet ist.

7. Schweinestall nach Anspruch 5 oder 6, **dadurch gekennzeichnet, dass** der Verbindungsgang (17) wenigstens eine Außentür (31) aufweist, die zwischen den Zugängen (18, 21) zu den Buchten (1, 2, 3, 4) einerseits und dem Außenauslauf (29) andererseits ausgebildet ist.

8. Schweinestall nach einem der Ansprüche 5 bis 7, **dadurch gekennzeichnet, dass** die Buchteneinheit (32) zusammen mit gleichen Buchteneinheiten (33, 34, 35) in einfachsymmetrischer Anordnung beidseitig des die Symmetrieachse ausbildenden Zentralganges (28) angeordnet sind.

9. Schweinestall nach einem der Ansprüche 1 bis 8, **dadurch gekennzeichnet, dass** unterhalb der Futter- und Toilettenbereiche (13, 13, 15, 16) ein Güllekeller mit einer Wärmerückgewinnung ausgebildet ist.

10. Schweinestall nach einem der Ansprüche 1 bis 9, **dadurch gekennzeichnet, dass** jede Bucht (1, 2, 3, 4) eine Fußbodenerwärmung mit wenigstens drei unabhängig voneinander ansteuerbaren Heizkreisen aufweist, wobei wenigstens einer der Heizkreise im Aufenthaltsbereich (5, 6, 7, 8) für Muttersauen und Ferkel angeordnet ist und wenigstens zwei der Heizkreise im Ferkelnest (9, 10, 11, 12) angeordnet sind.

11. Schweinestall nach einem der Ansprüche 1 bis 10, **dadurch gekennzeichnet, dass** in jeder Bucht (1, 2, 3, 4) wenigstens ein Gemeinschaftsfuttertrog (44, 45, 46, 47) angeordnet ist, der einen im Futter- und Toilettenbereich (13, 14, 15, 16) angeordneten Trogabschnitt (48, 49, 50, 51) und einen im Ferkelnest (9, 10, 11, 12) angeordneten Trogabschnitt (52, 53, 54, 55) aufweist.

12. Schweinestall nach einem der Ansprüche 3 bis 11, **dadurch gekennzeichnet, dass** in jedem Futter- und Toilettenbereich (13, 14, 15, 16) wenigstens ein an der Zwischenwandung (22) klappbeweglich gehaltenes Funktionsgestänge (56, 57, 58, 59) angeordnet ist, mit welchen in heruntergeklappter Stellung eine Ablegehilfe für Muttersauen und in hochgeklappter Stellung ein Futtertrog für Ferkel ausgebildet ist.
